# EUROPEAN PATENT SPECIFICATION

(11) **EP 2 902 897 B1**
(45) Date of publication and mention of the grant of the patent: **27.02.2019**
(21) Application number: 13840923.0
(22) Date of filing: 04.09.2013
(51) Int. Cl.: G06F 3/0488

(54) **WORD PROCESSING METHOD AND APPARATUS FOR TOUCHSCREEN INTELLIGENT DEVICE**
WORTVERARBEITUNGSVERFAHREN UND VORRICHTUNG FÜR EINE INTELLIGENTE BERÜHRUNGSBILDSCHIRMVORRICHTUNG
PROCÉDÉ ET APPAREIL DE TRAITEMENT DE TEXTE POUR DISPOSITIF INTELLIGENT À ÉCRAN TACTILE

(30) Priority: 27.09.2012 CN 201210370025
(43) Date of publication of application: 05.08.2015
(73) Proprietor: Shenzhen TCL New Technology Co., LTD, Shenzhen, Guangdong 518052 (CN)
(72) Inventor: LIU, Yun, Shenzhen Guangdong 518052 (CN); LI, Zhufeng, Shenzhen Guangdong 518052 (CN)
(74) Representative: Kuhnen & Wacker Patent- und Rechtsanwaltsbüro PartG mbB
(86) International application number: PCT/CN2013/082946
(87) International publication number: WO 2014/048231

(56) References cited:
- EP-A2- 2 098 947
- EP-A2- 2 284 671
- WO-A2-2010/035180
- CN-A- 101 226 452
- CN-A- 101 291 496
- CN-A- 102 016 777
- CN-A- 102 053 768
- CN-A- 102 880 422
- US-A1- 2002 036 618
- US-A1- 2009 228 792
- US-A1- 2009 256 857
- US-A1- 2011 141 044
- US-A1- 2012 162 093
- US-A1- 2012 229 397

## Description

### BACKGROUND

### 1. Technical Field

The present disclosure relates to smart technologies, and particularly, to a word processing method and a word processing device for a smart device with touch screen.

### 2. Description of Related Art

As touch screens are more and more widely used in smart devices such as mobile phones with touch screen and tablet computers, many functions, for example, word editing functions of personal computers can be realized through the touch screens. At present, compared with the operations on personal computers, most text editing operations on the touch screen, for example, operations of copying and pasting the text on the touch screen are less inconvenient, which require specific instructions from the user before next reactions are performed. That is, the smart devices cannot rapidly understand the purpose of an operation from the user and the response efficiency is low.

US 2012/162093 A1 discloses a touch screen device where a word processing prompt menu is triggered if the distance between two touch points is less than a preset threshold.

### SUMMARY

One object of the present disclosure is to provide a word processing method and a word processing device for a smart device with a touch screen which facilitates the operation and provides a more rapid response.

The present invention relates to a method according to claim 1 and a device according to claim 7. Embodiments of the invention are defined in claims 2-6 and 8-12.

According to the embodiments, when performing the word processing operations, the smart device analyzes the user's gesture by using the multi-point touch technology and obtains the purpose of the word editing operation from the user according to the situation of the touch points, which facilitates the word processing operation and provides a more rapid response.

### DESCRIPTION OF THE DRAWINGS

FIG. 1 is a flow chart of a word processing method for smart device with touch screen in accordance with a first embodiment of the present disclosure;
FIG. 2 is a flow chart of a word processing method for smart device with touch screen in accordance with a second embodiment of the present disclosure;
FIG. 3 is a flow chart of a word processing method for smart device with touch screen in accordance with a third embodiment of the present disclosure;
FIG. 4 is a flow chart of a word processing method for smart device with touch screen in accordance with a fourth embodiment of the present disclosure;
FIG. 5 is a flow chart of a word processing method for smart device with touch screen in accordance with a fifth embodiment of the present disclosure;
FIG. 6 is a flow chart of a step of determining a scaling situation of a distance between two touch points in the word processing method;
FIG. 7 is a schematic view of a word processing device for smart device with touch screen in accordance with a first embodiment of the present disclosure;
FIG. 8 is a schematic view of a word processing device for smart device with touch screen in accordance with a second embodiment of the present disclosure;
FIG. 9 is a schematic view of a word processing device for smart device with touch screen in accordance with a third embodiment of the present disclosure;
FIG. 10 is a schematic view of a word processing device for smart device with touch screen in accordance with a fourth embodiment of the present disclosure;
FIG. 11 is a schematic view of a word processing device for smart device with touch screen in accordance with a fifth embodiment of the present disclosure; and
FIG. 12 is a schematic view of a word processing device for smart device with touch screen in accordance with a sixth embodiment of the present disclosure.

The realization of the object, features, and advantages of the present disclosure are given in further detail in combination with the embodiments with reference to the accompanying drawings.

### DETAILED DESCRIPTION

It should be understood that the embodiments described herein are only used to explain the present disclosure rather than to limit the present disclosure.

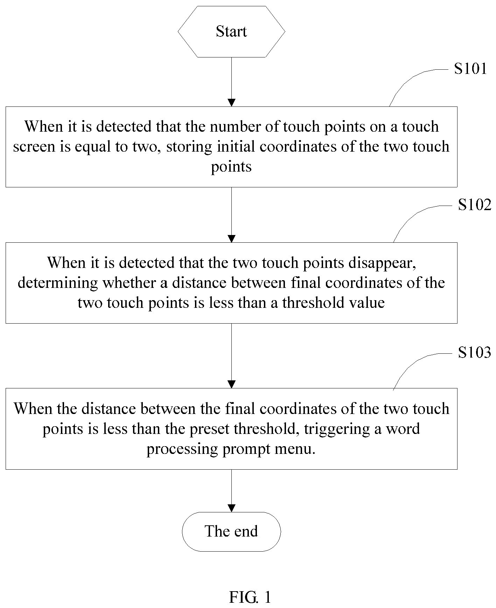

Referring to FIG. 1, which is a flow chart of a word processing method for smart device with touch screen in accordance with a first embodiment of the present disclosure, the word processing method includes steps as follows.

Step S101, when it is detected that the number of touch points on a touch screen is equal to two, storing initial coordinates of the two touch points.

In some embodiments, the touch screen of the smart device can support multi-point touch technology. When a user puts two fingers on the touch screen at the same time, the smart device detects the two touch points and stores the initial coordinates of the two touch points. After that, the smart device determines that words located between the two initial coordinates are needed to be processed.

Step S102, when it is detected that the two touch points disappear, determining whether a distance between final coordinates of the two touch points is less than a threshold value.

When the two fingers get closer, the smart device detects that the distance between the two touch points is reduced; when the fingers leave the touch screen, the distance between the two touch points is less than the preset threshold, the smart device determines that the user needs to perform the word processing operation and pops up a word processing prompt menu allowing the user to choose the corresponding option. Supposed that the distance between the initial coordinates of the two touch points is D(0), the threshold can be set to be a percentage of the initial distance D(0), for example, eighty percent of the initial distance D(0); when D(x) < 80%* D(0), the smart device determines that the user needs to copy or cut the words.

The threshold also can be preset to be within a range, for example, from sixty percent of D(0) to eighty percent of D(0); when 60%* D(0) < D(x) < 80%* D(0), the smart device determines that the user wants to copy or cut the words.

The threshold also can be preset to be a fixed value, for example, the fixed value can be equal to the width of one character. When D(x) is less than the width of one character, the smart device determines that the user wants to process the words.

Step S103, when the distance between the final coordinates of the two touch points is less than the preset threshold, triggering a word processing prompt menu.

The word processing prompt menu can include a copy/cut selection box, a search selection box, a word storing selection box, a word scaling selection box, such that the smart device can perform corresponding word processing operation according to the selection of the user.

According to the embodiment, when the smart device performs the word processing operation, the word processing method of the embodiment analyzes the user's gesture by using the multi-point touch technology and obtains the purpose of the word editing operation from the user according to the situation of the touch points, which facilitates the word processing operation and provides a more rapid response.

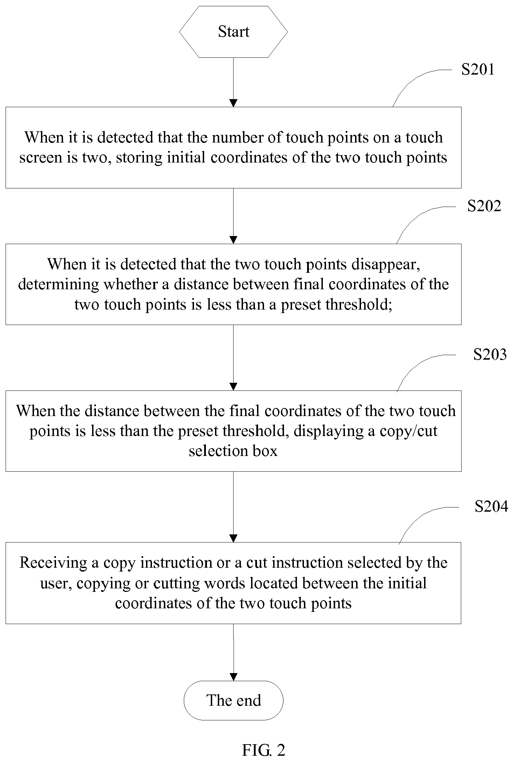

FIG. 2 is a flow chart of a word processing method for smart device with touch screen in accordance with a second embodiment. Compared with the method of the first embodiment, the word processing method of the second embodiment is based on copy/cut operations from the user, and correspondingly, the word processing prompt menu includes a copy/cut selection box. The word processing method of the second embodiment includes steps as follows:
step S201, when it is detected that the number of touch points on a touch screen is two, storing initial coordinates of the two touch points;
step S202, when it is detected that the two touch points disappear, determining whether a distance between final coordinates of the two touch points is less than a preset threshold;
step S203, when the distance between the final coordinates of the two touch points is less than the preset threshold, displaying a copy/cut selection box; and
step S204, receiving a copy instruction or a cut instruction selected by the user, copying or cutting words located between the initial coordinates of the two touch points.

The copy/cut selection box can include a copy option, a cut option, and a cancel option. When the user selects the copy option, the smart device stores the words located between the initial coordinates of the two touch points to the clipboard of the system; when the user selects the cut option, the smart device deletes the words located between the initial coordinates of the two touch points and stores the words to the clipboard of the system; when the user selects the cancel option, the smart device performs no operations.

According to the embodiment, when the smart device is used to perform the copy/cut operation, the word processing method of the embodiment analyzes the user's gesture by using the multi-point touch technology and obtains the purpose of the word editing operation from the user according to the situation of the touch points on the touch screen, which facilitates the copy/cut operation and provides a more rapid response.

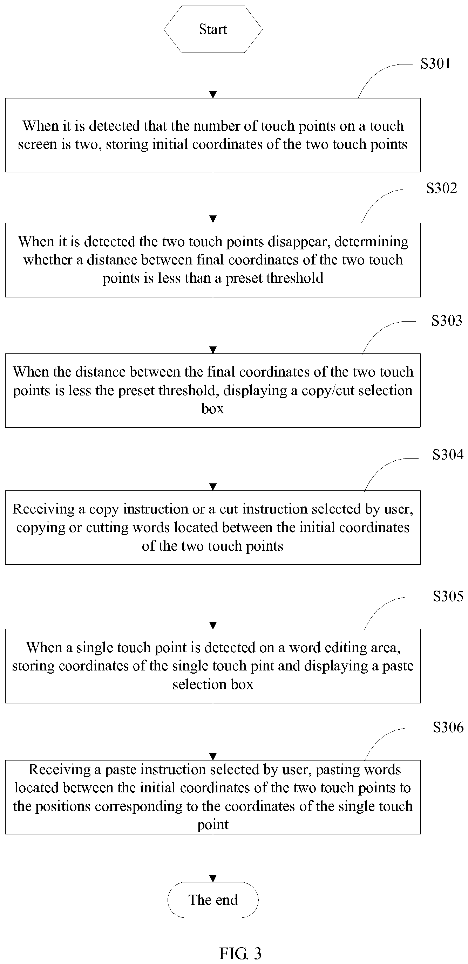

Referring to FIG. 3, which is a flow chart of a word processing method for smart device with touch screen in accordance with a third embodiment, based on the second embodiment, the word processing method of the third embodiment includes steps as follows:
step S301, when it is detected that the number of touch points on a touch screen is two, storing initial coordinates of the two touch points;
step S302, when it is detected the two touch points disappear, determining whether a distance between final coordinates of the two touch points is less than a preset threshold;
step S303, when the distance between the final coordinates of the two touch points is less the preset threshold, displaying a copy/cut selection box;
step S304, receiving a copy instruction or a cut instruction selected by the user, copying or cutting words located between the initial coordinates of the two touch points;
step S305, when a single touch point is detected on a word editing area, storing coordinates of the single touch pint and displaying a paste selection box; and
step S306, receiving a paste instruction selected by the user, pasting words located between the initial coordinates of the two touch points to the position corresponding to the coordinates of the single touch point.

In the step S305, the smart device generates a single touch point when detecting that one finger of the user enters the word editing area and then pops up the paste selection box.

The paste selection box includes a paste option, a cancel option, and an ending option. Correspondingly, following operations are performed: when the user selects the paste option, pasting the words which are previously copied or cut to the position corresponding to the coordinates of the single touch point; when the user selects the cancel option, no operations are performed; or, when the user selects the ending option, clearing the stored words and the coordinates of the touch points. By finger touch point operations, the word processing method of the embodiment provides a much simpler paste operation on the smart device.

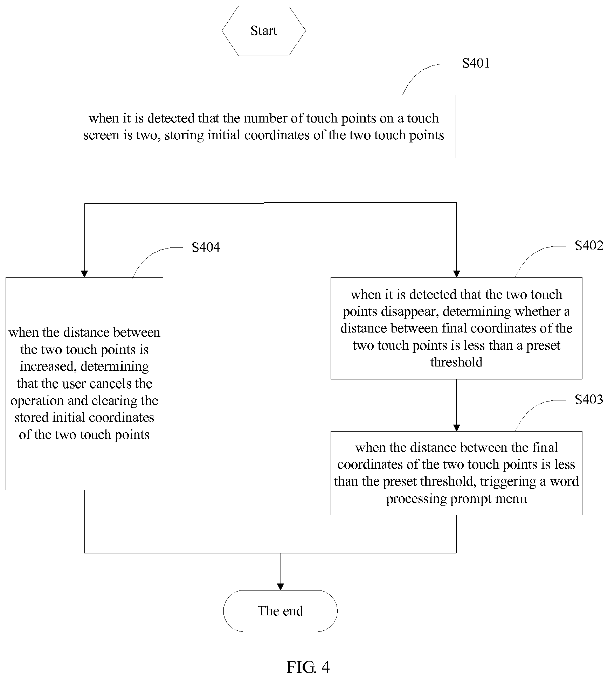

Referring to FIG. 4, which is a flow chart of a word processing method for smart device with touch screen in accordance with a fourth embodiment, based on the first embodiment, the word processing method of the embodiment includes steps as follows:
step S401, when it is detected that the number of touch points on a touch screen is two, storing initial coordinates of the two touch points;
step S402, when it is detected that the two touch points disappear, determining whether a distance between final coordinates of the two touch points is less than a preset threshold;
step S403, when the distance between the final coordinates of the two touch points is less than the preset threshold, triggering a word processing prompt menu; and
step S404, when the distance between the two touch points is increased, determining that the user cancels the operation and clearing the stored initial coordinates of the two touch points.

In the embodiment, when the two fingers get closer, it is considered that the selected word range is not the desired one. When the two fingers move apart, the smart device determines that the user cancels the operation and clears the initial coordinates of the two touch points when detecting that the distance between the two touch points is increased. By getting the touch points closer or moving the touch points apart, the word selection can be easily realized or canceled, facilitating the operation and providing a more rapid response speed.

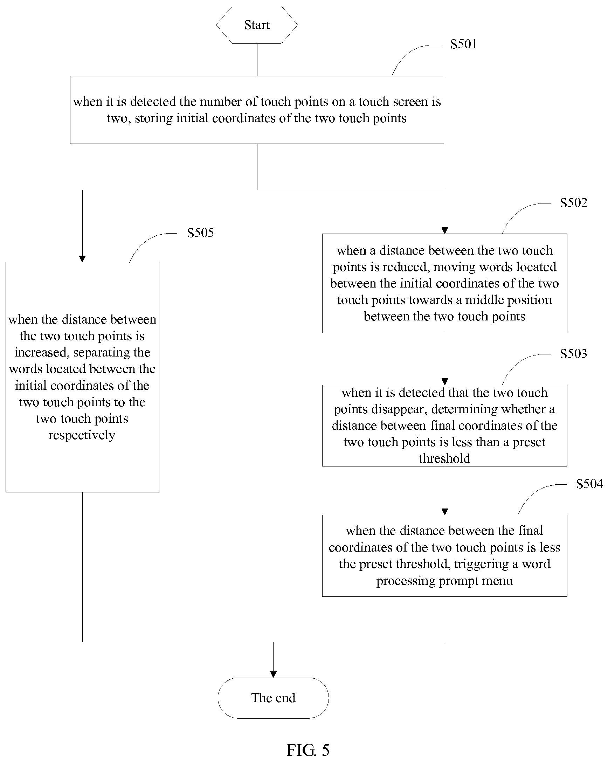

Referring to FIG. 5, which is a flow chart of a word processing method for smart device with touch screen in accordance with a fifth embodiment, based on the first embodiment, the word processing method includes steps as follows:
step S501, when it is detected the number of touch points on a touch screen is two, storing initial coordinates of the two touch points;
step S502, when a distance between the two touch points is reduced, moving words located between the initial coordinates of the two touch points towards a middle position between the two touch points;
step S503, when it is detected that the two touch points disappear, determining whether a distance between final coordinates of the two touch points is less than a preset threshold;
step S504, when the distance between the final coordinates of the two touch points is less the preset threshold, triggering a word processing prompt menu; and
step S505, when the distance between the two touch points is increased, separating the words located between the initial coordinates of the two touch points to the two touch points respectively.

In step S502, when the two fingers get closer, the words located between the two touch points move towards the middle position, providing a visual effect that the words are pinched by the fingers and thus improving the user' visual experience.

When the touch points move apart, the words located between the two touch points correspondingly move apart, providing a visual effect that the words are put down by the fingers and thus improving the user's visual experience.

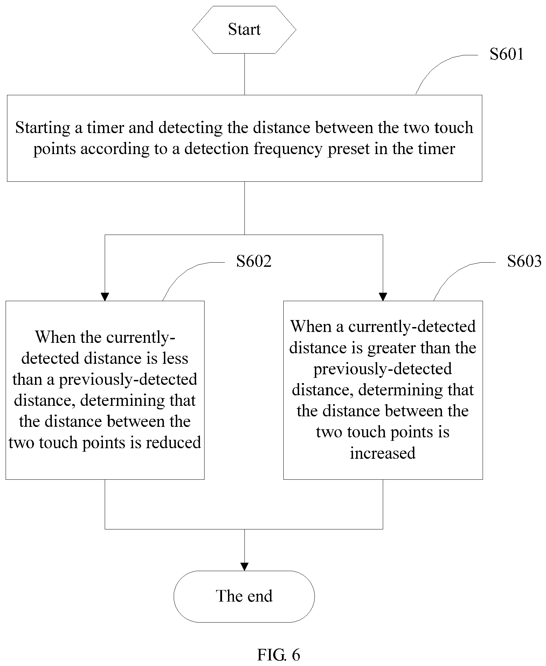

Referring to FIG. 6, which is a flow chart of a step of determining the scaling situation of the distance between the touch points in the word processing method for smart device with touch screen, the step includes steps as follows.

Step S601, starting a timer and detecting the distance between the two touch points according to a detection frequency preset in the timer.

The smart device regularly detects the coordinates of the touch points and calculates the distance between the touch points, for example, the smart device performs the detection once per 20 milliseconds.

Step S602, when a currently-detected distance is less than a previously-detected distance, determining that the distance between the two touch points is reduced.

Supposed that the currently-detected distance is D(x) and the previously-detected distance is D(x-1), when D(x)< D(x-1), it indicates that the distance between the two touch points is reduced.

Step S603, when the currently-detected distance is greater than the previously-detected distance, determining that the distance between the two touch points is increased.

When D(x)> D(x-1), it indicates that the distance between the two touch points is reduced.

According to the embodiment, the word processing method analyzes the user's gesture by using multi-point touch technology and obtains the purpose of the word editing operation from the user by detecting the distance between the two touch points in real time, which facilitates the copy/cut operation and provides a more rapid response.

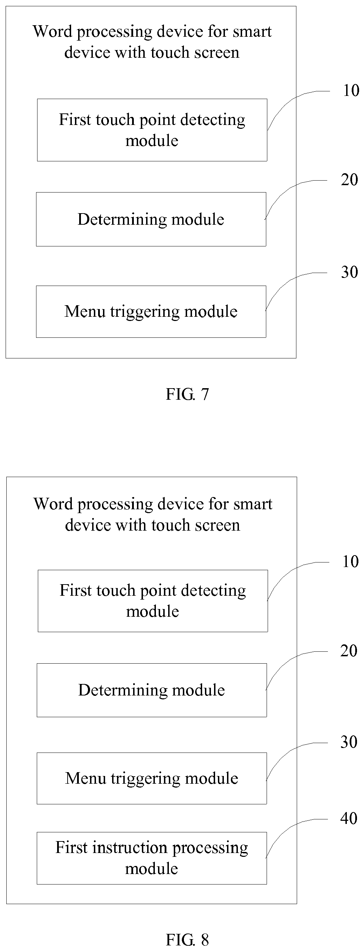

Referring to FIG. 7, which is a schematic view of a word processing device for smart device with touch screen in accordance with a first embodiment, the word processing device includes a first touch point detecting module 10, a determining module 20, and a menu triggering module 30.

The first touch point detecting module 10 is configured to store initial coordinates of two touch points when it is detected that the number of the touch points is equal to two.

The determining module 20 is configured to determine whether a distance between final coordinates of the two touch points is less than a preset threshold when it is detected that the two touch point disappear.

The menu triggering module 30 is configured to trigger a word processing prompt menu when the distance between the final coordinates of the two touch points is less than the preset threshold.

The touch screen of the smart device supports multi-point touch technology. When the user puts two fingers on the touch screen, the smart device detects two touch points and stores the initial coordinates of the two touch points. At this time, the smart device determines that the words located between the initial coordinates of the two touch points are needed to be processed. When the user gets the two fingers closer, the smart device detects that the distance between the two touch points is reduced; when the user moves the fingers away from the touch screen, the distance between the two touch points is less than the preset threshold, correspondingly, the smart device determines that the user wants to perform the word processing operation and pops up the word processing prompt menu allowing the user to select the corresponding option. Supposed that the distance between the initial coordinates of the two touch points is D(0), the threshold can be set to be a percentage of the initial distance D(0), for example, eighty percent of the initial distance D(0); when D(x) < 80%* D(0), the smart device determines that the user needs to copy or cut the words.

The threshold also can be preset to be within a range, for example, from sixty percent of D(0) to eighty percent of D(0); when 60%* D(0) < D(x) < 80%* D(0), the smart device determines that the user wants to copy or cut the words.

The threshold also can be preset to be a fixed value, for example, the fixed value can be equal to the width of one character. When D(x) is less than the width of one character, the smart device determines that the user wants to process the words.

The word processing prompt menu can include a copy/cut selection box, a search selection box, a word storing selection box, a word scaling selection box, such that the smart device can perform corresponding word processing operation according to the selection of the user.

According to the embodiment, when performing the word processing operation, the word processing device analyzes the user's gesture by using the multi-point touch technology and obtains the purpose of the word editing operation from the user according to the situation of the touch points, which facilitates the word processing operation and provides a more rapid response.

FIG. 8 is a schematic view of a word processing device for smart device with touch screen in accordance with a second embodiment of the present disclosure. Compared with the device of the first embodiment, the second embodiment is based on copy/cut operations from the user, and correspondingly, the word processing prompt menu includes a copy/cut selection box. The word processing device further includes a first instruction processing module 40. The first instruction processing module 40 is configured to receive a copy instruction or a cut instruction selected by the user and copy or cut the words located between the initial coordinates of the two touch points.

The copy/cut selection box can include a copy option, a cut option, and a cancel option. When the user selects the copy option, the smart device stores words located between the initial coordinates of the two touch points to the clipboard of the system; when the user selects the cut option, the smart device deletes the words located between the initial coordinates of the two touch points and stores the words to the clipboard of the system; when the user selects the cancel option, the smart device performs no operations.

According to the embodiment, when performing the copy/cut operation, the word processing device analyzes the user's gesture by using the multi-point touch technology and obtains the purpose of the word editing operation from the user according to the situation of the touch points on the touch screen, which facilitates the copy/cut operation and provides a more rapid response.

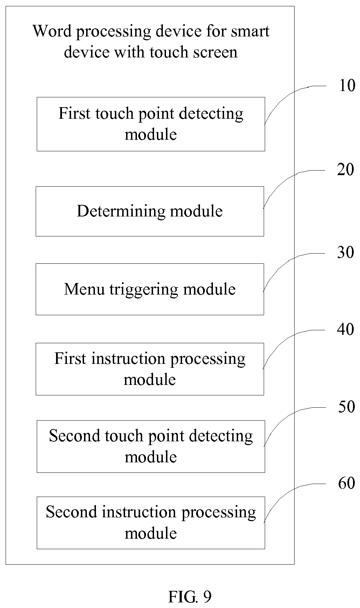

Referring to FIG. 9, which is a schematic view of a word processing device for smart device with touch screen in accordance with a third embodiment of the present disclosure, based on the embodiment shown in FIG. 8, the word processing device of this embodiment further includes a second touch point detecting module 50 and a second instruction processing module 60. The second touch point detecting module 50 is configured to store coordinates of a single touch point when the single touch point is detected on a word editing area and display a paste selection box. The second instruction processing module 60 is configured to receive a paste instruction selected by the user and paste the words located between the initial coordinates of the two touch points to a position corresponding to the coordinates of the single touch point.

The smart device pops up a paste selection box when detecting one finger of the user enters the word editing area. The paste selection box includes a paste option, a cancel option, and an ending option. Following operations are performed according to the selection of the user: when the user selects the paste option, pasting the words which are previously copied or cut to the position corresponding to the coordinates of the single touch point; when the user selects the cancel option, no operations are performed; when the user selects the ending option, clearing the stored words and the coordinates of the touch points. By finger touch point operations, the word processing method of the embodiment provides a much simpler paste operation on the smart device.

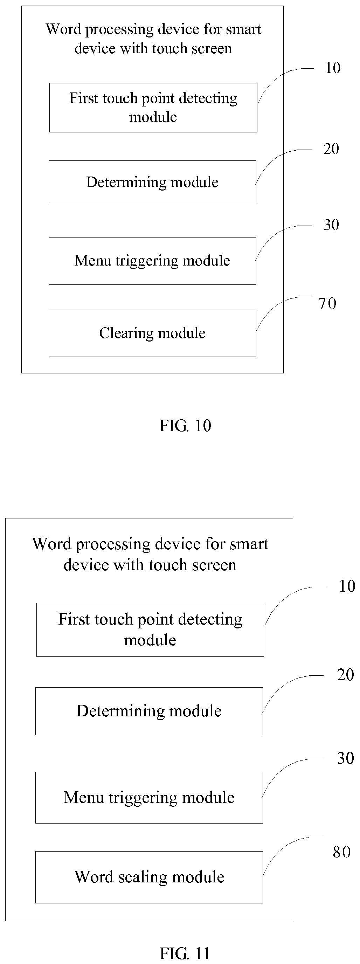

Referring to FIG. 10, which is a schematic view of a word processing device for smart device with touch screen in accordance with a fourth embodiment, based on the word processing device of embodiment shown in FIG. 7, the word processing device further includes a clearing module 70 configured to determine that the operation is canceled by the user and clear the stored initial coordinates of the two touch points when the distance between the two touch points is increased.

In the embodiment, when the user gets his fingers closer, it is considered that the selected word range is not desired; at this time, when the two fingers move apart, the smart device determines that the operation is canceled by the user on detecting that the distance between the two touch points is increased and clears the initial coordinates of the two touch points. By getting the touch points closer or moving the touch points apart, the word processing device of the embodiment can easily realize or cancel word selection, thus, the operation is convenient and the response speed of the system is much more rapid.

FIG. 11 is a schematic view of a word processing device in accordance with a fifth embodiment of the present disclosure, based on the word processing device of the embodiment shown in FIG. 7, the word processing device of the fifth embodiment further includes a word scaling module 80 configured to move the words located between the initial coordinates of the two touch points towards the middle position between the two touch points when the distance between the two touch points is reduced. The word scaling module 80 is also configured to separate the words located between the initial coordinates of the two touch points into the two touch points respectively when the distance between the two touch points is increased.

When the user gets the two fingers closer, the words located between the two touch points move towards the middle position, providing a visual effect that the words are pinched by the fingers and further improving the user's visual experience. When the touch points move apart, the words located between the touch points correspondingly move apart, providing a visual effect that the words are put down by the fingers and thereby improving the user's visual experience.

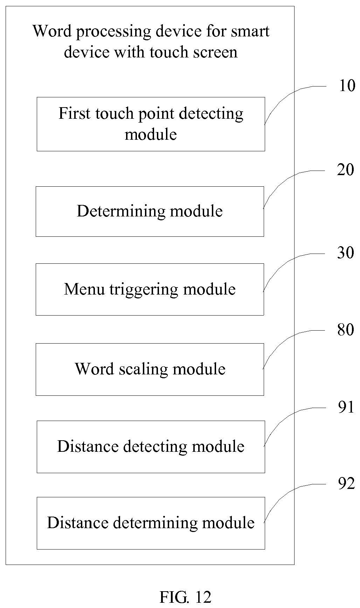

Referring to FIG. 12, which is a schematic view of a word processing device for smart device with touch screen in accordance with a sixth embodiment of the present disclosure, based on the embodiment shown in FIG. 11, the word processing device of this embodiment further includes a distance detecting module 91 and a distance determining module 92.

The distance detecting module 91 is configured to start a timer and detect the distance between the two touch points according to a detection frequency preset in the timer.

The distance determining module 92 is configured to determine that the distance between the two touch points is reduced when the currently-detected distance is less than the previously-detected distance, and to determine that the distance between the two touch points is increased when the currently-detected distance is greater than the previously-detected distance.

According to this embodiment, the mobile terminal detects the coordinates of the touch points on the touch screen and calculates the distance between the two touch points. For example, the smart device detects the coordinates once per 20 milliseconds. Supposed that the currently-detected distance is D(x) and the previously-detected distance is D(x-1), when D(x)<D(x-1), it indicates that the distance between the two touch points is reduced; when D(x)>D(x-1), it indicates that the distance between the two touch points is increased. According to the embodiment, the word processing device analyzes the users' gesture by using the multi-point touch technology and obtains the purpose of the word editing operation from user by detecting the distance between the touch points in real time, which facilitates the word processing operation and provides a more rapid response speed.

Even though information and the advantages of the present embodiments have been set forth in the foregoing description, together with details of the mechanisms and functions of the present embodiments, the disclosure is illustrative only; and that changes may be made in detail, especially in matters of shape, size, and arrangement of parts within the principles of the present embodiments to the full extend indicated by the broad general meaning of the terms in which the appended claims are expressed.

## Claims

1. A word processing method for a smart device with a touch screen, comprising the following steps:
when it is detected that the number of touch points on a touch screen is two, storing the initial coordinates of the two touch points (S201, S301);
when it is detected that the two touch points disappear, determining whether a distance between the final coordinates of the two touch points is less than a preset threshold (S202, S302); and
when the distance between the final coordinates of the two touch points is less than the preset threshold, triggering a word processing prompt menu, wherein the word processing prompt menu comprises a copy/cut selection box (S203, S303);
receiving a copy instruction or a cut instruction selected by user, copying or cutting words located between the initial coordinates of the two touch points (S204, S304).

2. The word processing method of claim 1, wherein after the step of when it is detected that the number of touch points on a touch screen is two, storing initial coordinates of the two touch points, the word processing method further comprises:
when a distance between the two touch points is reduced, moving words located between the initial coordinates of the two touch points towards a middle position between the two touch points (S502);
when a distance between the two touch points is increased, separating the words located between the initial coordinates of the two touch points into the two touch points respectively (S505).

3. The word processing method of claim 2, wherein after the step of when it is detected that the number of touch points on a touch screen is two, storing initial coordinates of the two touch points, the word processing method further comprises:
starting a timer and detecting a distance between the two touch points according to a detection frequency present in the timer (S601);
when a currently-detected distance is less than a previously-detected distance, determining that the distance between the two touch points is reduced (S602); and
when the currently-detected distance is greater than the previously-detected distance, determining that the distance between the two touch points is increased (S603).

4. The word processing method of claim 1 or 3, wherein the preset threshold is equal to eighty percent of a distance between the initial coordinates of the two touch points.

5. The word processing method of claim 4, wherein after the step of receiving a copy instruction or a cut instruction selected by user, copying or cutting words located between the initial coordinates of the two touch points, the word processing method further comprises:
when a single touch point is detected on a word editing area, storing coordinates of the single touch point and displaying a paste selection box (S305); and
receiving a paste instruction selected by user, pasting the words located between the initial coordinates of the two touch points to a position corresponding to coordinates of the single touch point (S306).

6. The word processing method of claim 3, wherein after the step of when it is detected that the number of touch points on a touch screen is two, storing initial coordinates of the two touch points, the word processing method further comprises:
when the distance between the two touch points is increased, determining that the operation is cancelled by user and clearing the stored initial coordinates of the two touch points.

7. A word processing smart device with a touch screen, comprising:
a first touch point detecting module (20), configured to store initial coordinates of two touch points when it is detected that the number of the touch points on the touch screen is two;
a determining module (20), configured to determine whether a distance between the final coordinates of the two touch points is less than a preset threshold; and
a menu triggering module (30), configured to trigger a word processing prompt menu when the distance between the final coordinates of the two touch points is less than the preset threshold;
wherein the word processing prompt menu comprises a copy/cut selection box; the word processing device comprises a first instruction processing module (40) configured to receive a copy instruction or a cut instruction selected by user and copy or cut words located between the initial coordinates of the two touch points.

8. The word processing device of claim 7, wherein the preset threshold is equal to eighty percent of a distance between the initial coordinates of the two touch points.

9. The word processing device of claim 7, further comprising:
a second touch point detecting module (50), configured to store coordinates of a single touch point when the single touch point is detected on a word editing area and display a paste selection box; and
a second instruction processing module (50), configured to receive a paste instruction selected by user and paste the words located between the initial coordinates of the two touch points to a position corresponding to the coordinates of the single touch point.

10. The word processing device of claim 8, further comprising a clearing module (70) configured to determine that the operation is canceled by user when a distance between the two touch points is increased and clear the stored initial coordinates of the two touch points.

11. The word processing device of claim 7, further comprising a word scaling (80) configured to, when the distance between the two touch points is reduced, move words located between the initial coordinates of the two touch points towards a middle position between the two touch points; and when the distance between the two touch points is increased, separate the words located between the two touch points into the two touch points respectively.

12. The word processing module of claim 11, further comprising a distance detecting module (91) and a distance determining module (92); the distance detecting module is configured to start a timer and detect the distance between the two touch points according to a detection frequency present in the timer; the distance determining module is configured to determine that the distance between the two touch points is reduced when a currently-detected distance is less than a previously-detected distance, and to determine that the distance between the two touch points is increased when the currently-detected distance is greater than the previously-detected distance.

## Patentansprüche

1. Textverarbeitungsverfahren für eine Smartvorrichtung mit einem berührungsempfindlichen Bildschirm, aufweisend die folgenden Schritte:
wenn erfasst wird, dass die Anzahl an Berührungspunkten auf einem berührungsempfindlichen Bildschirm zwei ist, Speichern der ursprünglichen Koordinaten der zwei Berührungspunkte (S201, S301);
wenn erfasst wird, dass die zwei Berührungspunkte verschwinden, Bestimmen, ob eine Entfernung zwischen den Finalkoordinaten der zwei Berührungspunkte geringer ist als ein voreingestellter Schwellenwert (S202, S302); und,
wenn die Entfernung zwischen den Finalkoordinaten der zwei Berührungspunkte geringer ist als der voreingestellte Schwellenwert, Öffnen eines Textverarbeitungseingabemenüs, wobei das Textverarbeitungseingabemenü ein Kopieren/Ausschneiden-Auswahlfeld (S203, S303) aufweist;
Empfangen einer Kopieranweisung oder einer Ausschneideanweisung, die durch den Benutzer ausgewählt wird, Kopieren oder Ausschneiden von Wörtern, die sich zwischen den ursprünglichen Koordinaten der zwei Berührungspunkte (S204, S304) befinden.

2. Textverarbeitungsverfahren nach Anspruch 1, wobei nach dem Schritt, bei dem erfasst wird, dass die Anzahl an Berührungspunkten auf einem berührungsempfindlichen Bildschirm zwei ist, die ursprünglichen Koordinaten der zwei Berührungspunkte gespeichert werden, wobei das Textverarbeitungsverfahren ferner aufweist:
wenn eine Entfernung zwischen den zwei Berührungspunkten verringert wird, Bewegen von Wörtern, die sich zwischen den ursprünglichen Koordinaten der zwei Berührungspunkte befinden, in Richtung einer Mittelposition zwischen den zwei Berührungspunkten (S502);
wenn eine Entfernung zwischen den zwei Berührungspunkten vergrößert wird, Trennen der Wörter, die sich zwischen den ursprünglichen Koordinaten der zwei Berührungspunkte befinden, jeweils in die zwei Berührungspunkte (S505).

3. Textverarbeitungsverfahren nach Anspruch 2, wobei nach dem Schritt, bei dem erfasst wird, dass die Anzahl an Berührungspunkten auf einem berührungsempfindlichen Bildschirm zwei ist, die ursprünglichen Koordinaten der zwei Berührungspunkte gespeichert werden, wobei das Textverarbeitungsverfahren ferner aufweist:
Starten eines Zeitmessers und Erfassen einer Entfernung zwischen den zwei Berührungspunkten nach einer Erfassungsfrequenz, die in dem Zeitmesser (S601) vorliegt;
wenn eine gegenwärtig erfasste Entfernung geringer ist als eine zuvor erfasste Entfernung, Bestimmen, dass die Entfernung zwischen den zwei Berührungspunkten verringert ist (S602); und
wenn die gegenwärtig erfasste Entfernung größer ist als die zuvor erfasste Entfernung, Bestimmen, dass die Entfernung zwischen den zwei Berührungspunkten vergrößert ist (S603).

4. Textverarbeitungsverfahren nach Anspruch 1 oder 3, wobei der voreingestellte Schwellenwert achtzig Prozent einer Entfernung zwischen den ursprünglichen Koordinaten der zwei Berührungspunkte entspricht.

5. Textverarbeitungsverfahren nach Anspruch 4, wobei, nach dem Schritt des Empfangens einer Kopieranweisung oder einer Ausschneideanweisung, die durch den Benutzer ausgewählt wird, Wörter kopiert oder ausgeschnitten werden, die sich zwischen den ursprünglichen Koordinaten der zwei Berührungspunkte befindet, wobei das Textverarbeitungsverfahren ferner aufweist:
wenn ein einzelner Berührungspunkt in einem Wortbearbeitungsbereich erfasst wird, Speichern der Koordinaten des einzelnen Berührungspunktes und Anzeigen eines Einfügungsauswahlfeldes (S305); und
Empfangen einer Einfügeanweisung, die durch den Benutzer ausgewählt ist, Einfügen der Wörter, die sich zwischen den ursprünglichen Koordinaten der zwei Berührungspunkte befinden, in eine Position, die den Koordinaten des einzelnen Berührungspunkts (S306) entspricht.

6. Textverarbeitungsverfahren nach Anspruch 3, wobei, nach dem Schritt, bei dem erfasst wird, dass die Anzahl an Berührungspunkten auf einem berührungsempfindlichen Bildschirm zwei beträgt, die ursprünglichen Koordinaten der zwei Berührungspunkte gespeichert werden, wobei das Textverarbeitungsverfahren ferner aufweist:
wenn die Entfernung zwischen den zwei Berührungspunkten vergrößert wird, Bestimmen, dass der Vorgang durch den Benutzer abgebrochen wird und Löschen der gespeicherten ursprünglichen Koordinaten der zwei Berührungspunkte.

7. Smarte Textverarbeitungsvorrichtung mit einem berührungsempfindlichen Bildschirm, aufweisend:
ein erstes Berührungspunkterfassungsmodul (20),
so konfiguriert, dass es die ursprünglichen Koordinaten zweier Berührungspunkte speichert, wenn erfasst wird, dass die Anzahl der Berührungspunkte auf dem berührungsempfindlichen Bildschirm zwei beträgt;
ein Bestimmungsmodul (20),
so konfiguriert, dass es bestimmt, ob eine Entfernung zwischen den Finalkoordinaten der zwei Berührungspunkte geringer ist als ein voreingestellter Schwellenwert; und
ein Menüöffnungsmodul (30)
so konfiguriert, dass es ein Textverarbeitungseingabemenü öffnet, wenn die Entfernung zwischen den Finalkoordinaten der zwei Berührungspunkte geringer ist als der voreingestellte Schwellenwert;
wobei das Textverarbeitungseingabemenü ein Kopieren/Ausschneiden-Auswahlfeld aufweist; die Textverarbeitungsvorrichtung ein erstes Anweisungsverarbeitungsmodul (40) aufweist, das so konfiguriert ist, dass es eine Kopieranweisung oder eine Ausschneideanweisung empfängt, die durch den Benutzer ausgewählt wurden und Wörter kopiert oder ausschneidet, die sich zwischen den ursprünglichen Koordinaten der zwei Berührungspunkte befinden.

8. Textverarbeitungsvorrichtung nach Anspruch 7, wobei der voreingestellte Schwellenwert achtzig Prozent einer Entfernung zwischen den ursprünglichen Koordinaten der zwei Berührungspunkte entspricht.

9. Textverarbeitungsvorrichtung nach Anspruch 7, ferner aufweisend:
ein zweites Berührungspunkterfassungsmodul (50),
so konfiguriert, dass es Koordinaten eines einzelnen Berührungspunkts speichert, wenn der einzelne Berührungspunkt in einem Wortbearbeitungsbereich erfasst wird, und ein Einfügungsauswahlfeld darstellt; und
ein zweites Anweisungsverarbeitungsmodul (50),
so konfiguriert, dass es eine Einfügeanweisung empfängt, die durch den Benutzer ausgewählt wurde, und die Wörter, die sich zwischen den ursprünglichen Koordinaten der zwei Berührungspunkte befinden, in eine Position einfügt, die den Koordinaten des einzelnen Berührungspunktes entspricht.

10. Textverarbeitungsvorrichtung nach Anspruch 8, ferner aufweisend ein Löschmodul (70), das so konfiguriert ist, dass es bestimmt, dass der Vorgang durch den Benutzer abgebrochen wurde, wenn eine Entfernung zwischen den zwei Berührungspunkten vergrößert wird, und die gespeicherten ursprünglichen Koordinaten der zwei Berührungspunkte löscht.

11. Textverarbeitungsvorrichtung nach Anspruch 7, ferner aufweisend eine Wortskalierung (80),
so konfiguriert, dass sie, wenn die Entfernung zwischen den zwei Berührungspunkten verringert wird, Wörter, die sich zwischen den ursprünglichen Koordinaten der zwei Berührungspunkte befinden, in Richtung einer Mittelposition zwischen den zwei Berührungspunkten bewegt; und, wenn die Entfernung zwischen den zwei Berührungspunkten vergrößert wird, die Wörter, die sich zwischen den zwei Berührungspunkten befinden, jeweils in die zwei Berührungspunkte trennt.

12. Textverarbeitungsmodul nach Anspruch 11, ferner aufweisend ein Entfernungserfassungsmodul (91) und ein Entfernungsbestimmungsmodul (92); wobei das Entfernungserfassungsmodul so konfiguriert ist, dass es einen Zeitmesser startet und die Entfernung zwischen den zwei Berührungspunkten gemäß einer Erfassungsfrequenz, die sich in dem Zeitmesser befindet, erfasst; wobei das Entfernungsbestimmungsmodul so konfiguriert ist, dass es bestimmt, dass die Entfernung zwischen den zwei Berührungspunkten verringert ist, wenn eine gegenwärtig erfasste Entfernung geringer ist als eine zuvor erfasste Entfernung, und bestimmt, dass die Entfernung zwischen den zwei Berührungspunkten vergrößert ist, wenn die gegenwärtig erfasste Entfernung größer ist als die zuvor erfasste Entfernung.

## Revendications

1. Procédé de traitement de texte pour un dispositif intelligent à écran tactile, comprenant les étapes suivantes consistant à,
lorsqu'il est détecté que le nombre de points de contact sur un écran tactile est de deux, stocker les coordonnées initiales des deux points de contact (S201, S301) ;
lorsqu'il est détecté que les deux points de contact disparaissent, déterminer si une distance entre les coordonnées finales des deux points de contact est inférieure à un seuil préétabli (S202, S302) ; et,
lorsque la distance entre les coordonnées finales des deux points de contact est inférieure au seuil préétabli, déclencher un menu de sollicitation de traitement de texte, dans lequel le menu de sollicitation de traitement de texte comprend une boîte de sélection de copie/coupe (S203, S303) ; recevoir une instruction de copie ou une instruction de coupe sélectionnée par l'utilisateur, copier ou couper les mots situés entre les coordonnées initiales des deux points de contact (S204, S304).

2. Procédé de traitement de texte selon la revendication 1, dans lequel, après l'étape consistant lorsqu'il est détecté que le nombre de points de contact sur un écran tactile est de deux, à stocker des coordonnées initiales des deux points de contact, le procédé de traitement de texte comprend en outre :
lorsqu'une distance entre les deux points de contact est réduite, le déplacement de mots situés entre les coordonnées initiales des deux points de contact vers une position médiane entre les deux points de contact (S502) ;
lorsqu'une distance entre les deux points de contact est augmentée, la séparation des mots situés entre les coordonnées initiales des deux points de contact respectivement en les deux points de contact (S505).

3. Procédé de traitement de texte selon la revendication 2, dans lequel, après l'étape consistant, lorsqu'il est détecté que le nombre de points de contact sur un écran tactile est de deux, à stocker des coordonnées initiales des deux points de contact, le procédé de traitement de texte comprend en outre :
le démarrage d'une minuterie et la détection d'une distance entre les deux points de contact selon une fréquence de détection présente dans la minuterie (S601) ;
lorsqu'une distance couramment détectée est inférieure à une distance précédemment détectée, la détermination que la distance entre les deux points de contact est réduite (S602) ; et,
lorsque la distance couramment détectée est supérieure à la distance précédemment détectée, la détermination que la distance entre les deux points de contact est augmentée (S603).

4. Procédé de traitement de texte selon la revendication 1 ou 3, dans lequel le seuil préétabli est égal à quatre-vingts pour cent d'une distance entre les coordonnées initiales des deux points de contact.

5. Procédé de traitement de texte selon la revendication 4, dans lequel après l'étape de réception d'une instruction de copie ou d'une instruction de coupe sélectionnée par l'utilisateur, la copie ou la coupe de mots situés entre les coordonnées initiales des deux points de contact, le procédé de traitement de texte comprend en outre :
lorsqu'un point de contact unique est détecté sur une zone d'édition de texte, le stockage de coordonnées du point de contact individuel et l'affichage d'une boîte de sélection de collage (S305) ; et la réception d'une instruction de collage sélectionnée par l'utilisateur, le collage des mots situés entre les coordonnées initiales des deux points de contact dans une position correspondant aux coordonnées du point de contact individuel (S306).

6. Procédé de traitement de texte selon la revendication 3, dans lequel, après l'étape consistant, lorsqu'il est détecté que le nombre de points de contact sur un écran tactile est de deux, à stocker des coordonnées initiales des deux points de contact, le procédé de traitement de texte comprend en outre :
lorsque la distance entre les deux points de contact est augmentée, la détermination que l'opération est annulée par l'utilisateur et la suppression des coordonnées initiales stockées des deux points de contact.

7. Dispositif de traitement de texte intelligent avec un écran tactile, comprenant :
un premier module de détection de points de contact (20) configuré pour stocker des coordonnées initiales de deux points de contact lorsqu'il est détecté que le nombre des points de contact sur l'écran tactile est de deux ;
un module de détermination (20), configuré pour déterminer si une distance entre les coordonnées finales des deux points de contact est inférieure à un seuil préétabli ; et
un module de déclenchement de menu (30), configuré pour déclencher un menu de sollicitation de traitement de texte lorsque la distance entre les coordonnées finales des deux points de contact est inférieure au seuil préétabli ;
dans lequel le menu de sollicitation de traitement de texte comprend une boîte de sélection de copie/coupe ; le dispositif de traitement de texte comprend un premier module de traitement d'instruction (40) configuré pour recevoir une instruction de copie ou une instruction de coupe sélectionnée par l'utilisateur et copier ou couper des mots situés entre les coordonnées initiales des deux points de contact.

8. Procédé de traitement de texte selon la revendication 7, dans lequel le seuil préétabli est égal à quatre-vingts pour cent d'une distance entre les coordonnées initiales des deux points de contact.

9. Procédé de traitement de texte selon la revendication 7, comprenant en outre :
un second module de détection de points de contact (50) configuré pour stocker des coordonnées d'un point de contact unique lorsque le point de contact individuel est détecté sur une zone d'édition de texte et afficher une boîte de sélection de collage ; et
un second module de traitement d'instruction (50), configuré pour recevoir une instruction de collage sélectionnée par l'utilisateur et coller les mots situés entre les coordonnées initiales des deux points de contact dans une position correspondant aux coordonnées du point de contact unique.

10. Procédé de traitement de texte selon la revendication 8, comprenant en outre un module d'effacement (70) configuré pour déterminer que l'opération est annulée par l'utilisateur lorsqu'une distance entre les deux points de contact est augmentée et effacer les coordonnées initiales stockées des deux points de contact.

11. Procédé de traitement de texte selon la revendication 7, comprenant en outre une mise à l'échelle de texte (80) configurée pour, lorsque la distance entre les deux points de contact est réduite, déplacer des mots situés entre les coordonnées initiales des deux points de contact vers une position médiane entre les deux points de contact ; et, lorsque la distance entre les deux points de contact est augmentée, séparer les mots situés entre les deux points de contact dans les deux points de contact, respectivement.

12. Module de traitement de texte selon la revendication 11, comprenant en outre un module de détection de distance (91) et un module de détermination de distance (92) ; le module de détection de distance est configuré pour démarrer une minuterie et détecter la distance entre les deux points de contact selon une fréquence de détection présente dans la minuterie ; le module de détermination de distance est configuré pour déterminer que la distance entre les deux points de contact est réduite lorsqu'une distance couramment détectée est inférieure à une distance précédemment détectée, et déterminer que la distance entre les deux points de contact est augmentée lorsque la distance couramment détectée est supérieure à la distance précédemment détectée.
